# EUROPEAN PATENT SPECIFICATION

(11) **EP 3 124 892 B1**
(45) Date of publication and mention of the grant of the patent: **02.01.2019**
(21) Application number: 15767708.9
(22) Date of filing: 17.03.2015
(51) Int. Cl.: F24S 80/20, F24S 90/00, F24S 40/60

(54) **HEAT-MEDIUM DISCHARGE DEVICE AND HEAT-MEDIUM DISCHARGE METHOD**
HEIZMEDIUMENTLADUNGSVORRICHTUNG UND HEIZMEDIUMENTLADUNGSVERFAHREN
DISPOSITIF D'ÉVACUATION DE MILIEU THERMIQUE ET PROCÉDÉ D'ÉVACUATION DE MILIEU THERMIQUE

(30) Priority: 28.03.2014 JP 2014067606
(43) Date of publication of application: 01.02.2017
(73) Proprietor: Chiyoda Corporation, Kanagawa 220-8765 (JP)
(72) Inventor: YASUI, Makoto, Yokohama-shi Kanagawa 220-8765 (JP); YUASA, Minoru, Yokohama-shi Kanagawa 220-8765 (JP)
(74) Representative: Prüfer & Partner mbB Patentanwälte · Rechtsanwälte
(86) International application number: PCT/JP2015/057817
(87) International publication number: WO 2015/146698

(56) References cited:
- EP-A2- 0 653 596
- WO-A1-2011/024647
- WO-A1-2011/024755
- WO-A1-2012/156472
- WO-A1-2013/034587
- WO-A1-2013/034587
- DE-A1- 2 720 755
- JP-A- 2008 014 627
- US-A- 4 691 692
- US-B1- 8 474 446

## Description

### Technical Field

The present invention relates to a heat-medium discharge device and a heat-medium discharge method for a solar heat collection device.

### Background Art

As an example of a system that realizes the efficient and stable electric power supply using renewable energy, a power generation plant using solar heat can be exemplified (for example, see Patent Literatures 1 and 2).

In the power generation plant using the solar heat, the solar heat is collected by a solar heat collection device, the collected heat is fed to a heat exchanger through a heat medium, water is changed into steam by the heat, and a turbine is driven by the steam to generate electric power.

The heat collected by the solar heat collection device can be stored in a heat storage device through the heat medium. Then, when the stored heat is fed again to the heat exchanger through the heat medium at a time zone such as a night in which solar rays cannot be collected, electric power can be generated. For this reason, electric power can be stably supplied.

As the heat medium used in the power generation plant, synthetic oil is generally used. However, in recent years, there has been an attempt to change the heat medium from the synthetic oil to a molten salt.

When the heat medium is changed from the synthetic oil to the molten salt, following advantages can be obtained.

First, since high-temperature steam can be supplied compared with the related art, power generation efficiency can be improved and power generation cost can be decreased. Further, in the system that uses the molten salt as the heat medium, the capacity of a heat storage tank used in the system can be decreased compared with the related art. Further, since the molten salt is used as a heat storage medium in the related art (the heat medium: synthetic oil), there is a need to exchange heat between the synthetic oil and the molten salt. However, since the entire system is moved only by the molten salt, the heat exchanger is not needed and thus the plant can have a simpler configuration.

### Citation List

### Patent Literature

Patent Literature 1: US 2010/0043776 A
Patent Literature 2: JP 2014-31787 A
Patent Literature 3: DE 27 20 755 A1
Patent Literature 4: EP 0 653 596 A2
Patent Literature 5: WO 2013/034587 A1
Patent Literature 6: US 8 474 446 B1
Patent Literature 7: US 4 691 692 A1

### Summary of Invention

### Technical Problem

Incidentally, in the solar heat collection device used in the power generation plant, the solar rays are collected by a light collection mirror (a reflection mirror) to heat a heat collection pipe (a heat medium channel) and thus the temperature of the heat medium rises . A pipe for circulating the heat medium is connected to the heat collection pipe (the heat medium channel), and the heat medium channels of the plurality of solar heat collection devices are connected to the pipe.

In such a solar heat collection device, there is a need to discharge the heat medium from the heat medium channel in short time when there is concern that the heat medium flowing through the heat medium channel may be solidified due to a decrease in temperature thereof in a maintenance or power failure state.

That is, the heat medium channel which circulates the heat medium to the solar heat collection device is configured to circulate the heat medium by a pump. However, there is a case where the heat medium inside the heat medium channel is discharged, for example, for maintenance. Further, the heat medium is circulated in the heat medium channel by the pump. However, when the supply of electric power is interrupted due to a power failure or an accident or the pump is broken, the circulation of the heat medium is stopped. Here, when a molten salt having a congealing point temperature higher than an atmospheric temperature is used as the heat medium, there is a possibility that the heat medium not flowing through the heat medium channel is cooled and solidified in relatively short time. In this case, the heat medium channel is blocked by the solidified heat medium when the operation is resumed. Thus, there is a need to heat the heat medium channel to melt the heat medium. As a result, some time and cost are taken when the operation is resumed.

Further, for example, when the circulation of the heat medium having a low boiling point is stopped at a day time in fine weather, the heat medium inside the solar heat collection device is heated while not flowing therein. As a result, there is concern that the temperature of the heat medium may exceed the boiling point.

Thus, when the pump for circulating the heat medium is stopped and the pump cannot be operated again due to some reasons, there is a need to discharge the heat medium from the heat medium channel.

If the tank is installed at a position lower than the solar heat collection device when the heat medium is discharged, the heat medium can be fed to the tank by gravity.

However, since the tank has a height of 15 m or more, a large hole needs to be formed in a ground in order to install the tank therein when the tank needs to be installed at a position lower than the solar heat collection device. In this case, a problem arises in that considerable time is taken for forming the hole or installing the tank.

The invention is made in view of the above-described circumstances and an object of the invention is to provide a heat-medium discharge device and a heat-medium discharge method capable of discharging a heat medium from a solar heat collection device by gravity without installing a tank storing the heat medium at a position lower than the solar heat collection device .

### Solution to Problem

In order to attain the above-described object, according to the invention, there is provided a heat-medium discharge device for discharging a heat medium from a heat medium channel of a solar heat collection device including the heat medium channel, the heat-medium discharge device including: a vent portion which is provided at a highest position of the heat medium channel and introduces air into the heat medium channel when the heat medium is discharged; an angled pipe which is connected to the heat medium channel and is inclined with respect to a horizontal plane; a drain container which is connected to a position lower than a portion connected to the heat medium channel in the angled pipe and receives the heat medium flowing from the heat medium channel through the angled pipe; and a pump which feeds the heat medium from the drain container to a tank.

Here, when the heat medium channels of the plurality of solar heat collection devices are connected to the angled pipe, one drain container may be disposed at a position lower than the connection position of the heat medium channel of the solar heat collection device disposed at the lowest position among the plurality of solar heat collection devices or the drain containers may be respectively disposed at positions lower than the connection positions of the heat medium channels of the plurality of predetermined solar heat collection devices.

In the invention, when the vent portion provided at the highest position of the heat medium channel is opened to introduce air into the heat medium channel during the heat medium discharge operation, the heat medium flows from the heat medium channel into the angled pipe by gravity and further flows through the angled pipe by gravity to be received in the drain container. Then, the heat medium can be fed from the drain container to the tank by the pump to be stored in the tank.

Thus, it is possible to discharge the heat medium from the solar heat collection device by gravity without installing the tank at a position lower than the solar heat collection device .

In the above-described configuration of the invention, a heat medium channel of each of a plurality of the solar heat collection devices may be connected to the angled pipe and the drain container may be disposed at a position lower than the connection position of the heat medium channel of the solar heat collection device disposed at a lowest position among the plurality of solar heat collection devices.

According to such a configuration, since the drain container is disposed at the lowest position, the heat medium of the heat medium channels of all solar heat collection devices can be received in one drain container. Thus, the time for installing the drain container is short compared with a case where the drain container is provided at a plurality of positions .

Further, in the above-described configuration of the invention, angled pipes which are inclined in different directions with respect to the horizontal plane may be connected at lowermost ends thereof in the inclination direction and the drain container may be connected to the connection portion.

According to such a configuration, since the heat medium can be received in the drain container from the heat medium channels of the solar heat collection devices respectively connected to different angled pipe, the heat medium in the heat medium channel of the solar heat collection device can be efficiently discharged.

According to the invention, there is provided a heat-medium discharge method of discharging a heat medium from a heat medium channel of a solar heat collection device including the heat medium channel, the heat-medium discharge method including: introducing air into the heat medium channel when the heat medium is discharged at a highest position of the heat medium channel so that the heat medium flows to an angled pipe connected to the heat medium channel and inclined with respect to a horizontal plane; receiving the heat medium flowing through the angled pipe into a drain container connected to a position lower than the connection portion of the heat medium channel; and feeding the heat medium from the drain container to a tank by a pump.

In the invention, since air is introduced into the heat medium channel at the highest position of the heat medium channel during the heat medium discharge operation, the heat medium flows from the heat medium channel into the angled pipe by gravity and further flows through the angled pipe by gravity to be received in the drain container. Then, the heat medium can be fed from the drain container to the tank by the pump to be stored in the tank. Thus, it is possible to discharge the heat medium from the solar heat collection device by gravity without installing the tank at a position lower than the solar heat collection device .

Further, in the above-described configuration of the invention, the heat medium flowing through the angled pipe and the heat medium channel may be kept at a temperature in which the heat medium is not solidified and the inside of the drain container may be kept at a warm temperature in which the heat medium received in the drain container is not solidified.

According to such a configuration, it is possible to receive the heat medium from the heat medium channel of the solar heat collection device into the drain container by gravity without solidifying the heat medium and to feed the heat medium from the drain container to the tank without solidifying the heat medium so that the heat medium is stored in the tank while not being solidified.

### Advantageous Effects of Invention

According to the invention, it is possible to discharge a heat medium from a solar heat collection device by gravity without installing a tank at a position lower than the solar heat collection device.

### Brief Description of Drawings

Fig. 1 is a diagram illustrating a schematic configuration of a solar heat collection system including a heat-medium discharge device according to a first embodiment of the invention.
Fig. 2 is a diagram illustrating a schematic configuration of a solar heat collection system including a heat-medium discharge device according to a second embodiment of the invention.
Fig. 3 is a diagram illustrating a schematic configuration of a solar heat collection system including a heat-medium discharge device according to a third embodiment of the invention.

### Description of Embodiments

Hereinafter, embodiments of the invention will be described with reference to the drawings.

### (First Embodiment)

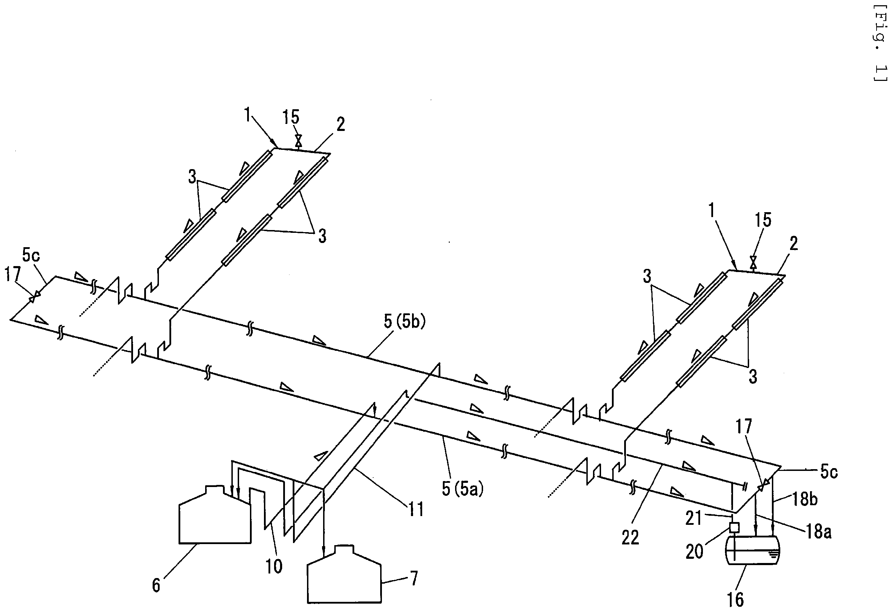

Fig. 1 illustrates a schematic configuration of a solar heat collection system including a heat-medium discharge device of a first embodiment. The heat-medium discharge device includes a plurality of solar heat collection devices 1. Additionally, two solar heat collection devices 1 are depicted in Fig. 1, but a plurality of (for example, one hundred or more) solar heat collection devices are provided in actual.

The solar heat collection device 1 includes a substantially U-shaped heat medium channel 2 and the heat medium channel 2 is heated by solar rays collected by a light collection mirror 3 so that the temperature of a heat medium flowing through the heat medium channel 2 rises to, for example, about 290°C to 550°C.

Additionally, in the embodiment, a molten salt which is formed by a mixture of sodium nitrate and potassium nitrate is used as the heat medium.

Further, in Fig. 1, a small right angled triangle indicates an inclination symbol and the heat medium channel 2 and an angled pipe 5 to be described later are inclined with respect to the horizontal plane in accordance with the inclination symbol.

The heat medium channel 2 of each solar heat collection device 1 is connected to the angled pipe 5. The angled pipe 5 is formed in a loop shape and is formed so that a left end of the angled pipe is higher than a right end thereof in Fig. 1. That is, the angled pipe 5 is inclined rightward and downward with respect to the horizontal plane in Fig. 1. Further, the angled pipe 5 includes two angledpipes 5a and 5b which are disposed in parallel and one angled pipe 5a and the other angled pipe 5b are connected to a pipe 5c at each of both ends. Additionally, the pipe 5c is provided with a valve 17, but the valve is normally closed.

Two tanks 6 and 7 are connected to the angled pipe 5. The tanks 6 and 7 are respectively used to store the heat medium therein. Here, the tank 6 stores the heat medium having a temperature of about 290°C which has not been heated by the solar heat collection device 1 and the tank 7 stores the heat medium having a temperature of about 550°C and heated by the solar heat collection device 1. Thus, in the description below, the tank 6 will be referred to as a cold side tank 6 and the tank 7 will be referred to as a hot side tank 7.

The cold side tank 6 is connected to the angled pipe 5a by a connection pipe 10 and the heat medium is fed from the cold side tank 6 to the angled pipe 5a through the connection pipe 10 by a pump (not illustrated) provided in the cold side tank 6. The heat medium which is fed to the angled pipe 5a is branched at the connection portion between the connection pipe 10 and the angled pipe 5a, a part of the heat medium flows rightward along the inclination of the angled pipe 5a, and the remaining heat medium flows leftward against the inclination of the angled pipe 5a.

Further, the hot side tank 7 is connected to the angled pipe 5b by a connection pipe 11 and the heat medium heated by the solar heat collection device 1 and flowing through the angled pipe 5b is fed to the hot side tank 7 through the connection pipe 11 by the pressure of the pump.

Additionally, the heat medium can be branched from a halfway position of the connection pipe 11 and can be also fed to the cold side tank 6 if necessary. For example, since the heat medium cannot be heated by the solar heat collection device 1 during the night when there is no sunshine, the heat medium is fed only to the cold side tank 6 by a switching valve provided at the branch portion in that case. Accordingly, it is possible to prevent the non-heated heat medium from being fed to the hot side tank 7.

Further, one end of the heat medium channel 2 of the solar heat collection device 1 is connected to the angled pipe 5a and the other end thereof is connected to the angled pipe 5b. Thus, the heat medium which flows through the angled pipe 5a during a normal operation is the heat medium which has not been heated by the solar heat collection device 1 and the heat medium which flows through the angled pipe 5b is the heat medium which is heated by the solar heat collection device 1.

Further, a vent portion 15 which introduces air into the heat medium channel 2 during a heat medium discharge operation is provided in the highest position (the highest position in the height direction) of the heat medium channel 2 of each solar heat collection device 1. The vent portion 15 is configured as, for example, a valve or the like. When the valve is opened during the heat medium discharge operation, air is introduced into the heat medium channel 2. Additionally, the valve may be an electromagnetic valve or a manual open/close valve, but an electromagnetic valve which can be opened or closed manually is desirable in order to open the valve when electric power is off.

Further, a drain container 16 is disposed at a position lower than the connection position of the heat medium channel 2 of the solar heat collection device 1 disposed at the lowest position among the plurality of solar heat collection devices 1 and the drain container 16 is connected to the angled pipe 5. Specifically, the drain container 16 is connected to the pipe 5c at the right end of the angled pipe 5.

The valve 17 is provided at the center portion of the pipe 5c, a portion of the pipe 5c near the angled pipe 5a in relation to the valve 17 is connected to the drain container 16 by a pipe 18a, and a portion of the pipe 5c near the angled pipe 5b in relation to the valve 17 is connected to the drain container 16 by a pipe 18b. Additionally, the valve 17 is normally closed.

Further, a valve (not illustrated) is provided at the connection portion between the pipe 18b and the pipe 5c. Then, when the valve is opened during the heat medium discharge operation, the heat medium which flows through the angled pipe 5b can be received in the drain container 16 through the pipe 5c and the pipe 18b. Further, the valve is closed during the normal operation in which the heat medium is not discharged from the solar heat collection device 1. Thus, it is possible to prevent the heated heat medium from flowing into the drain container 16.

Further, the heat medium which flows through the angled pipe 5a is normally fed to the drain container 16 by the pipes 5c and 18a.

Further, the heat-medium discharge device of the embodiment includes a pump 20 which feeds the heat medium from the drain container 16 to the cold side tank 6. A discharge pipe 21 is connected to the drain container 16 and the pump 20 is provided at a halfway position of the discharge pipe 21.

Meanwhile, a discharge pipe 22 is provided between the angled pipes 5a and 5b to be parallel to the angled pipes 5a and 5b and one end of the discharge pipe 22 is bent toward the cold side tank 6 and is connected to the cold side tank 6. Further, the other end of the discharge pipe 22 is connected to the discharge pipe 21.

Thus, the heat medium which is received in the drain container 16 is fed to the cold side tank 6 through the discharge pipes 21 and 22 by the pump 20 and is stored in the cold side tank 6.

In the solar heat collection system including the heat-medium discharge device with such a configuration, the heat medium is fed from the cold side tank 6 to the angled pipe 5a by a pump not illustrated in the drawings during the normal operation. Then, the heat medium is fed from the angled pipe 5a to the heat medium channel 2 of each solar heat collection device 1 and the heat medium which is heated by the solar ray passes through the connection pipe 11 from the angled pipe 5b so that the heat medium is stored in the hot side tank 7. The heat medium which is stored in the hot side tank 7 by a pipe (not illustrated) is fed to the power generation system and generates electric power by a turbine. The heat medium which is used to generate electric power and decreases in temperature is returned to the cold side tank 6 by a pipe (not illustrated) . Then, the heat medium is fed again from the cold side tank 6 to the angled pipe 5a through the connection pipe 10 by a pump (not illustrated) and the heat medium is heated by the solar heat collection device 1 as described above. Next, the heated heat medium is stored in the hot side tank 7. By such steps, electric power can be stably supplied.

Further, a part of the heat medium which flows through the angled pipe 5a is fed to the drain container 16 through the pipes 5c and 18a, is fed from the drain container 16 to the cold side tank 6 through the discharge pipes 21 and 22 by the pump 20, and is stored in the cold side tank 6.

Additionally, the heat medium may be fed from the drain container 16 to the cold side tank 6 through the discharge pipes 21 and 22 by the pressure of the pump (not illustrated) provided in the cold side tank 6 without the activation of the pump 20 during the normal operation. At this time, the drain container 16 and the cold side tank 6 are kept at a temperature in which the heat medium is not solidified. For this reason, the heat medium can be fed from the drain container 16 to the cold side tank 6 and can be stored in the cold side tank 6 while not being solidified.

Meanwhile, for example, when there is concern that the heat medium flowing through the heat medium channel 2 may be solidified due to a decrease in temperature thereof in a maintenance or power failure state, the heat medium is discharged from the heat medium channel 2 in this way.

First, the vent portion 15 which is provided at the highest position of the heat medium channel 2 of each solar heat collection device 1 is opened to introduce air into the heat medium channel 2 and the valve provided at the connection portion between the pipe 18b and the pipe 5c is opened.

Then, the heat medium flows from the heat medium channel 2 of each solar heat collection device 1 into the angled pipe 5 (5a and 5b) by gravity and the heat medium flows through the angled pipe 5 (5a and 5b) by gravity to be received in the drain container 16 through the pipes 18a and 18b.

The heat medium which is received in the drain container 16 is fed to the cold side tank 6 through the discharge pipes 21 and 22 by the pump 20 and is stored in the cold side tank 6.

Thus, the heat medium can be discharged from the plurality of solar heat collection devices 1 by gravity while the cold side tank 6 is not installed at a position lower than the solar heat collection device 1 and the cold side tank 6 can be economically installed.

Further, the heat medium flowing through the angled pipe 5 and the heat medium channel 2 is kept at a temperature in which the heating medium is not solidified and the inside of the drain container 16 is kept at a temperature in which the heat medium received in the drain container 16 is not solidified. That is, the flow rate of the heat medium is determined so that the heat medium is not solidified in consideration of the heat radiation amount from the angled pipe 5 and the heat medium channel 2 and the cold side tank 6, the hot side tank 7, and the drain container 16 are kept warm.

Thus, it is possible to receive the heat medium from the heat medium channel 2 of the solar heat collection device 1 into the drain container 16 by gravity without solidifying the heat medium and to feed the heat medium from the drain container 16 to the cold side tank 6 so that the heat medium is stored in the cold side tank 6 while not being solidified therein.

### (Second Embodiment)

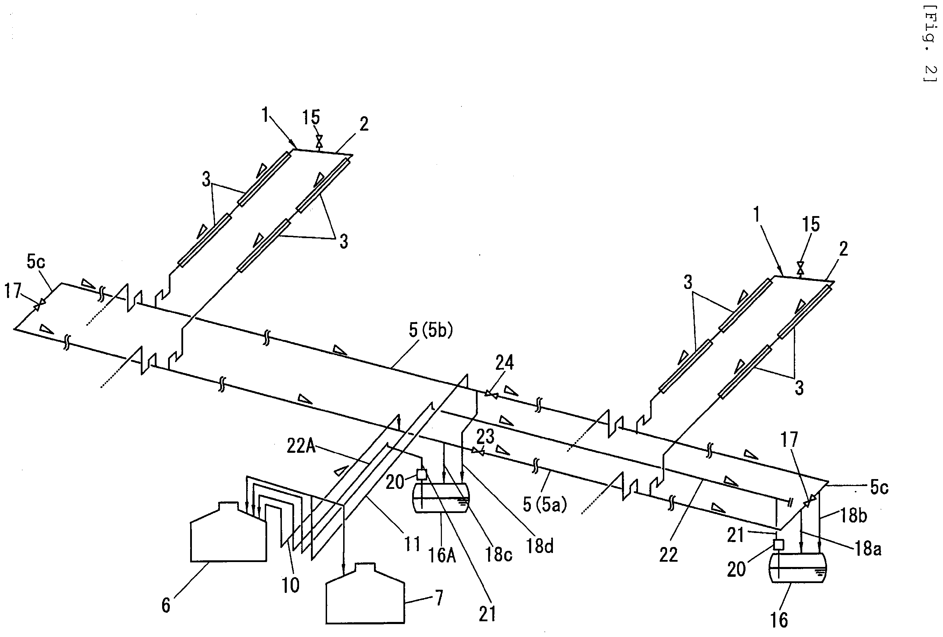

Fig. 2 illustrates a schematic configuration of a solar heat collection system including a heat-medium discharge device of a second embodiment. Since the heat-medium discharge device illustrated in this drawing is different from the heat-medium discharge device of the first embodiment in that two drain containers are provided, only this point will be described below. Here, the same reference numeral will be given to the same configuration as that of the first embodiment and the description thereof will be omitted or simplified.

As illustrated in Fig. 2, a drain container 16A is also disposed at the substantial center side of the angled pipe 5 in the inclination direction and the drain container 16A is also connected to the angled pipe 5. The substantial center portion of the angled pipe 5a in the inclination direction is connected to the drain container 16A by a pipe 18c and the substantial center portion of the angled pipe 5b in the inclination direction is connected to the drain container 16A by a pipe 18d.

Further, a valve 23 is provided in the angled pipe 5a to be located at a position near the drain container 16 in relation to the connection portion of the pipe 18c and a valve 24 is provided in the angled pipe 5b to be located at a position near the drain container 16 in relation to the connection portion of the pipe 18d. These valves 23 and 24 are normally opened.

Further, the pump 20 which feeds the heat medium from the drain container 16A to the cold side tank 6 is provided. The discharge pipe 21 is connected to the drain container 16A and the pump 20 is provided at a halfway position of the discharge pipe 21.

A discharge pipe 22A is connected to the discharge pipe 21 and the discharge pipe 22A is connected to the cold side tank 6.

Thus, the heat medium which is received in the drain container 16A during the heat medium discharge operation is fed to the cold side tank 6 through the discharge pipes 21 and 22A by the pump 20 and is stored in the cold side tank 6.

In such a heat-medium discharge device, the heat medium is discharged from the heat medium channel 2 as below, for example, when there is concern that the heat medium flowing through the heat medium channel 2 may be solidified due to a decrease in temperature thereof in the maintenance or power failure state.

First, the vent portion 15 provided at the highest position of the heat medium channel 2 of each solar heat collection device 1 is opened to introduce air into the heat medium channel 2, the valve provided at the connection portion between the pipe 18b and the pipe 5c is opened, and then the valves 23 and 24 are closed.

Then, the heat medium flows from the heat medium channel 2 of each solar heat collection device 1 into the angled pipe 5 (5a and 5b) by gravity at the upstream side of the valves 23 and 24 (the left side in Fig. 2). Further, the heat medium flows to the angled pipe 5 (5a and 5b) by gravity to be received in the drain container 16A through the pipes 18c and 18d.

The heat medium which is received in the drain container 16A is fed to the cold side tank 6 through the discharge pipes 21 and 22A by the pump 20 and is stored in the cold side tank 6.

Meanwhile, the heat medium flows from the heat medium channel 2 of each solar heat collection device 1 into the angled pipe 5 (5a and 5b) by gravity at the downstream side of the valves 23 and 24 (the right side in Fig. 2). Further, the heat medium flows to the angled pipe 5 (5a and 5b) by gravity to be received in the drain container 16 through the pipes 18a and 18b.

The heat medium which is received in the drain container 16 is fed to the cold side tank 6 through the discharge pipes 21 and 22 by the pump 20 and is stored in the cold side tank 6.

In this way, in the embodiment, since the heat medium which is discharged from the plurality of solar heat collection devices 1 can be received in two drain containers 16 and 16A, there is an advantage that the heat medium can be discharged from the solar heat collection device 1 by gravity in short time compared with the first embodiment.

Similarly to the first embodiment, the heat medium which flows through the angled pipe 5 and the heat medium channel 2 is kept at a temperature in which the heat medium is not solidified and the inside of the drain containers 16 and 16A is kept at a temperature in which the heat medium received in the drain containers 16 and 16A is not solidified. That is, the flow rate of the heat medium is determined so that the heat medium is not solidified in consideration of the heat radiation amount from the angled pipe 5 and the heat medium channel 2 and the cold side tank 6, the hot side tank 7, and the drain containers 16 and 16A are kept warm.

Thus, it is possible to receive the heat medium into the drain containers 16 and 16A by gravity from the heat medium channel 2 of the solar heat collection device 1 without solidifying the heat medium and to feed the heat medium from the drain containers 16 and 16A to the cold side tank 6 without solidifying the heat medium so that the heat medium is stored in the cold side tank 6 while not being solidified therein.

Additionally, in the embodiment, the heat medium channels 2 of two drain containers 16 and 16A are respectively connected to the most downstream side of the angled pipe 5 (the right side in Fig. 2) and the substantial center portion of the angled pipe 5 in the inclination direction, but the invention is not limited thereto. For example, three or more drain containers may be provided at a predetermined interval in the inclination direction of the angled pipe 5 and the heat medium channels thereof may be respectively connected to the angled pipe 5.

### (Third Embodiment)

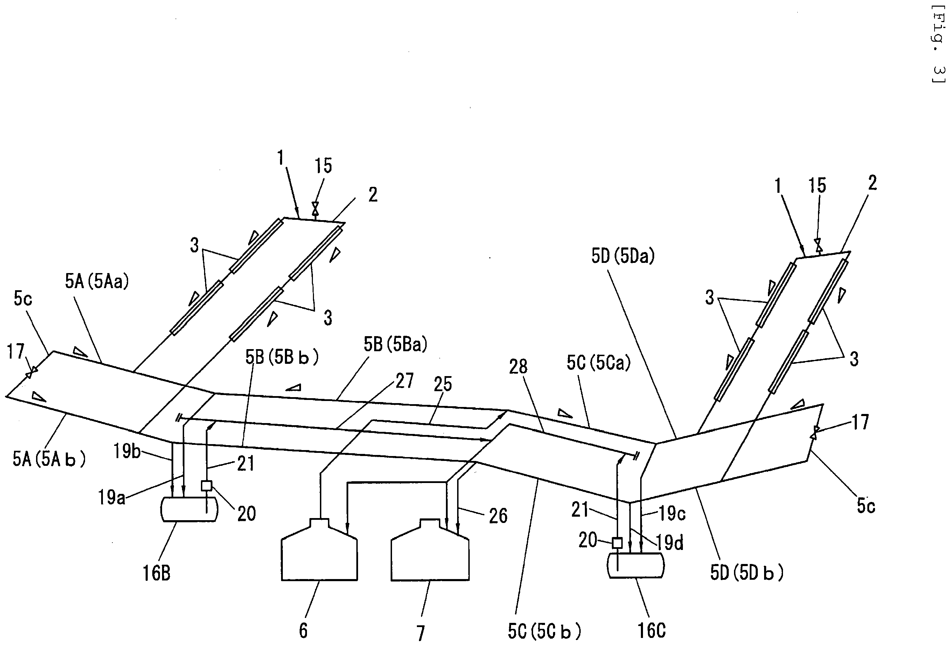

Fig. 3 illustrates a schematic configuration of a solar heat collection system including a heat-medium discharge device of a third embodiment. Since the heat-medium discharge device illustrated in this drawing is different from the heat-medium discharge device of the first embodiment in that a plurality of angled pipes are provided to be inclined in different direction with respect to the horizontal plane and two drain containers are provided, only this point will be described below. Here, the same reference numeral will be given to the same configuration as that of the first embodiment and the description thereof will be omitted or simplified.

In the embodiment, four angled pipes 5A to 5D are provided to form a loop and the adjacent angled pipes are connected to each other.

In Fig. 3, the angled pipe 5A is inclined rightward and downward, the angled pipe 5B is inclined leftward and downward, and the lowermost ends of the angled pipes 5A and 5B in the inclination direction are connected to each other. Further, the angled pipe 5C is inclined rightward and downward, the angled pipe 5D is inclined leftward and downward, and the lowermost ends of the angled pipes 5C and 5D in the inclination direction are connected to each other. Further, the uppermost ends of the angled pipe 5B and the angled pipe 5C in the inclination direction are connected to each other.

The inclination directions of the angled pipe 5A and the angled pipe 5C at the left and right sides are equal to each other and the inclination angles with respect to the horizontal plane are substantially equal to each other. Further, the inclination directions of the angled pipe 5B and the angled pipe 5D at the left and lower sides are equal to each other and the inclination angle with respect to the horizontal plane is large in the angled pipe 5D.

The heat medium channels 2 of the solar heat collection devices 1 are connected to the angled pipes 5A to 5D as in the first embodiment. In Fig. 3, two solar heat collection devices 1 are depicted, but the angled pipes 5A to 5D are respectively connected to the heat medium channels 2 of the solar heat collection devices 1.

The angled pipe 5A includes two angled pipes 5Aa and 5Ab which are disposed in parallel and one angled pipe 5Aa and the other angled pipe 5Ab are connected to each other by the pipe 5c at one ends thereof.

Further, one end of the heat medium channel 2 of the solar heat collection device 1 is connected to the angled pipe 5Aa and the other end thereof is connected to the angled pipe 5Ab.

The angled pipe 5B includes two angled pipes 5Ba and 5Bb which are disposed in parallel, one end of the heat medium channel of the solar heat collection device (not illustrated) is connected to the angled pipe 5Ba, and the other end thereof is connected to the angled pipe 5Bb.

The angled pipe 5C includes two angled pipes 5Ca and 5Cb which are disposed in parallel, one end of the heat medium channel of the solar heat collection device (not illustrated) is connected to the angled pipe 5Ca, and the other end thereof is connected to the angled pipe 5Cb.

The angled pipe 5D includes two angled pipes 5Da and 5Db which are disposed in parallel and one angled pipe 5Da and the other angled pipe 5Db are connected to each other by the pipe 5c at one ends thereof.

Further, one end of the heat medium channel 2 of the solar heat collection device 1 is connected to the angled pipe 5Da and the other end thereof is connected to the angled pipe 5Db.

Further, a drain container 16B is disposed at a position lower than the connection position of the heat medium channel 2 of the solar heat collection device 1 disposed at the lowest position among the plurality of solar heat collection devices 1 connected to the angled pipe 5A and is disposed at a position lower than the connection position of the heat medium channel of the solar heat collection device disposed at the lowest position among the plurality of solar heat collection devices (not illustrated) connected to the angled pipe 5B. Then, the drain container 16B is connected to the connection portion between the angled pipe 5A and the angled pipe 5B.

Specifically, the drain container 16B is connected to the connection portion between the angled pipe 5Aa and the angled pipe 5Ba through a pipe 19a and the drain container 16B is connected to the connection portion between the angled pipe 5Ab and the angled pipe 5Bb through a pipe 19b.

Further, a drain container 16C is disposed at a position lower than the connection position of the heat medium channel of the solar heat collection device disposed at the lowest position among the plurality of solar heat collection devices (not illustrated) connected to the angled pipe 5C and is disposed at a position lower than the connection position of the heat medium channel 2 of the solar heat collection device 1 disposed at the lowest position of the plurality of solar heat collection devices 1 connected to the angled pipe 5D. Then, the drain container 16C is connected to the connection portion between the angled pipe 5C and the angled pipe 5D.

Specifically, the drain container 16C is connected to the connection portion between the angled pipe 5Ca and the angled pipe 5Da through a pipe 19c and the drain container 16C is connected to the connection portion between the angled pipe 5Cb and the angled pipe 5Db through a pipe 19d.

Further, the cold side tank 6 is connected to the connection portion between the angled pipe 5Ba and the angled pipe 5Ca through a connection pipe 25 and the heat medium is fed from the cold side tank 6 to the connection portion between the angled pipe 5Ba and the angled pipe 5Ca by a pump (not illustrated) provided in the cold side tank 6. The heat medium which is fed to the connection portion is branched at the connection portion, a part of the heat medium flows leftward along the inclination of the angled pipe 5Ba, and the remaining heat medium flows rightward along the inclination of the angled pipe 5Ca.

The heat medium which flows through the angled pipe 5Ba further flows leftward through the angled pipe 5Aa against the inclination thereof. Then, the heat medium which flows through the angled pipe 5Ba and the angled pipe 5Aa flows to the heat medium channel 2 of the solar heat collection device 1 connected thereto.

The heat medium which flows through the angled pipe 5Ca further flows rightward through the angled pipe 5Da against the inclination thereof. Then, the heat medium which flows through the angled pipe 5Ca and the angled pipe 5Da flows to the heat medium channel 2 of the solar heat collection device 1 connected thereto.

Further, the hot side tank 7 is connected to the connection portion between the angledpipe 5Bb and the angledpipe 5Cb through a connection pipe 26 and the heat medium which is heated by the solar heat collection device 1 is fed to the hot side tank 7 by the pressure of the pump. That is, the heat medium which is heated by the solar heat collection device 1 located at the left side of the connection position of the connection pipe 26 passes through the angled pipes 5Ab and 5Bb and is fed to the hot side tank 7 through the connection pipe 26. Then, the heat medium which is heated by the right solar heat collection device 1 passes through the angled pipes 5Db and 5Cb and is fed to the hot side tank 7 through the connection pipe 26.

Further, a discharge pipe 27 is provided between the angled pipes 5Ba and 5Bb and the discharge pipe 21 of the drain container 16B is connected to the discharge pipe 27. Further, a discharge pipe 28 is provided between the angled pipes 5Ca and 5Cb and the discharge pipe 21 of the drain container 16C is connected to the discharge pipe 28. Further, the end of the discharge pipe 28 is bent toward the cold side tank 6 and is connected to the cold side tank 6. Additionally, the discharge pipe 28 is branched from a halfway position and is connected to the hot side tank 7. However, a switching valve is provided in the connection portion and the heat medium is normally fed to the cold side tank 6 by the switching valve. Further, the discharge pipe 27 is connected to the discharge pipe 28.

Thus, the heat medium which is received in the drain container 16B during the heat medium discharge operation is fed to the cold side tank 6 through the discharge pipes 21, 27, and 28 by the pump 20 and is stored in the cold side tank 6. Further, the heat medium which is received in the drain container 16C is fed to the cold side tank 6 through the discharge pipes 21 and 28 by the pump 20 and is stored in the cold side tank 6.

In such a heat-medium discharge device, the heat medium is discharged from the heat medium channel 2 as below, for example, when there is concern that the heat medium flowing through the heat medium channel 2 may be solidified due to a decrease in temperature thereof in the maintenance or power failure state.

First, the vent portion 15 provided at the highest position of the heat medium channel 2 of each solar heat collection device 1 is opened to introduce air into the heat medium channel 2.

Then, the heat medium flows from the heat medium channel 2 of the solar heat collection device 1 connected to the angled pipes 5A and 5B to the angled pipes 5A (5Aa, 5Ab) and 5B (5Ba, 5Bb) by gravity. Further, the heat medium flows to the angled pipes 5A (5Aa, 5Ab) and 5B (5Ba, 5Bb) by gravity to be received in the drain container 16B through the pipes 19a and 19b.

The heat medium which is received in the drain container 16B is fed to the cold side tank 6 through the discharge pipes 21, 27, and 28 by the pump 20 and is stored in the cold side tank 6.

Further, the heat medium flows from the heat medium channel 2 of the solar heat collection device 1 connected to the angled pipes 5C and 5D to the angled pipes 5C (5Ca, 5Cb) and 5D (5Da, 5Db) by gravity. Further, the heat medium flows to the angled pipes 5C (5Ca, 5Cb) and 5D (5Da, 5Db) by gravity to be received in the drain container 16C through the pipes 19c and 19d.

The heat medium which is received in the drain container 16C is fed to the cold side tank 6 through the discharge pipes 21 and 28 by the pump 20 and is stored in the cold side tank 6.

In this way, in the embodiment, since the heat medium which is discharged from the solar heat collection devices 1 each connected to the plurality of angled pipes 5A to 5D can be received in the drain containers 16B and 16C connected to the connection portions where the lowermost ends of the adjacent angled pipes 5A and 5B and the adjacent angled pipes 5C and 5D in the inclination direction are connected, the heat medium in the heat medium channel 2 of the solar heat collection device 1 can be efficiently discharged. Further, since the drain containers 16B and 16C can be disposed near the lowermost ends of the adjacent angled pipes 5A and 5B and the adjacent angled pipes 5C and 5D in the inclination direction, the drain container 16 can be disposed near the cold side tank 6 in relation to the end of the angled pipe 5 similarly to the first embodiment. Thus, the heat medium can be fed from the drain containers 16B and 16C to the cold side tank 6 in short time.

Further, since two drain containers 16B and 16C are provided, there is an advantage that the heat medium can be discharged from the solar heat collection device 1 in short time compared with the first embodiment. Further, since the plurality of angled pipes 5A to 5D are provided, the angled pipes 5A to 5D can be disposed in accordance with the shape of the installation land.

Similarly to first embodiment, the heat medium which flows through the angled pipes 5A to 5D and the heat medium channel 2 is kept at a temperature in which the heat medium is not solidified and the inside of the drain containers 16B and 16C is kept at a temperature in which the heat medium received in the drain containers 16B and 16C is not solidified. That is, the flow rate of the heat medium is determined so that the heat medium is not solidified in consideration of the heat radiation amount from the angled pipes 5A to 5D and the heat medium channel 2 and the cold side tank 6, the hot side tank 7, and the drain containers 16B and 16C are kept warm.

Thus, it is possible to receive the heat medium into the drain containers 16B and 16C by gravity from the heat medium channel 2 of the solar heat collection device 1 without solidifying the heat medium and to feed the heat medium from the drain containers 16B and 16C to the cold side tank 6 without solidifying the heat medium so that the heat medium is stored in the cold side tank 6 while not being solidified therein.

Additionally, in the first to third embodiments, an example has been described in which the molten salt formed by the mixture of sodium nitrate and potassium nitrate is used as the heat medium, but the heat medium may be other molten salts or other liquid metals or solutions. Furthermore, the heat medium may be also oil.

### Reference Signs List

1: solar heat collection device
2: heat medium channel
5, 5a, 5b: angled pipe
5A to 5D, 5Aa to 5Da, 5Ab to 5Db: angled pipe
6: cold side tank (tank)
15: vent portion
16, 16A to 16C: drain container
20: pump

## Claims

1. A heat-medium discharge device for discharging a heat medium from a heat medium channel (2) of a solar heat collection device (1) including the heat medium channel (2), the heat-medium discharge device comprising:
a vent portion (15) which is provided at a highest position of the heat medium channel (2) and introduces air into the heat medium channel (2) when the heat medium is discharged;
an angled pipe (5, 5a, 5b, 5A to 5D, 5Aa to 5Da, 5Ab to 5Db) which is connected to the heat medium channel (2) and is inclined with respect to a horizontal plane;
a drain container (16, 16A to 16C) which is connected to a position lower than a portion connected to the heat medium channel (2) in the angled pipe (5, 5a, 5b, 5A to 5D, 5Aa to 5Da, 5Ab to 5Db) and receives the heat medium flowing from the heat medium channel (2) through the angled pipe (5, 5a, 5b, 5A to 5D, 5Aa to 5Da, 5Ab to 5Db); and
a pump (20) which feeds the heat medium from the drain container (16, 16A to 16C) to a tank.

2. The heat-medium discharge device according to claim 1,
wherein a heat medium channel (2) of each of a plurality of the solar heat collection devices (1) is connected to the angled pipe (5, 5a, 5b, 5A to 5D, 5Aa to 5Da, 5Ab to 5Db), and
the drain container (16, 16A to 16C) is disposed at a position lower than the connection position of the heat medium channel (2) of the solar heat collection device (1) disposed at a lowest position among the plurality of solar heat collection devices (1).

3. The heat-medium discharge device according to claim 1,
wherein angled pipes (5, 5a, 5b, 5A to 5D, 5Aa to 5Da, 5Ab to 5Db) which are inclined in different directions with respect to the horizontal plane are connected at lowermost ends thereof in the inclination direction and the drain container (16, 16A to 16C) is connected to the connection portion.

4. A heat-medium discharge method of discharging a heat medium from a heat medium channel (2) of a solar heat collection device (1) including the heat medium channel (2), the heat-medium discharge method comprising:
introducing air into the heat medium channel (2) when the heat medium is discharged at a highest position of the heat medium channel (2) so that the heat medium flows to an angled pipe (5, 5a, 5b, 5A to 5D, 5Aa to 5Da, 5Ab to 5Db) connected to the heat medium channel and inclined with respect to a horizontal plane;
receiving the heat medium flowing through the angled pipe (5, 5a, 5b, 5A to 5D, 5Aa to 5Da, 5Ab to 5Db) into a drain container (16, 16A to 16C) connected to a position lower than the connection portion of the heat medium channel (2); and
feeding the heat medium from the drain container (16, 16A to 16C) to a tank (6) by a pump (20).

5. The heat-medium discharge method according to claim 4, wherein the heat medium flowing through the angled pipe (5, 5a, 5b, 5A to 5D, 5Aa to 5Da, 5Ab to 5Db) and the heat medium channel (2) is kept at a temperature in which the heat medium is not solidified and the inside of the drain container (16, 16A to 16C) is kept at a warm temperature in which the heat medium received in the drain container (16, 16A to 16C) is not solidified.

## Patentansprüche

1. Wärmemedium-Abführvorrichtung zum Abführen eines Wärmemediums aus einem Wärmemediumkanal (2) einer Solarwärmesammelvorrichtung (1) einschließend den Wärmemediumkanal (2), wobei die Wärmemedium-Abführvorrichtung umfasst:
einen Entlüftungsabschnitt (15), der an einer höchsten Position des Wärmemediumkanals (2) vorgesehen ist und Luft in den Wärmemediumkanal (2) einführt, wenn das Wärmemedium abgeführt wird;
ein abgewinkeltes Rohr (5, 5a, 5b, 5A bis 5D, 5Aa bis 5Da, 5Ab bis 5Db), welches mit dem Wärmemediumkanal (2) verbunden ist und in Bezug auf eine horizontale Ebene geneigt ist;
einen Ablaufbehälter (16, 16A bis 16C), der in einer Position verbunden ist, die niedriger ist als ein Abschnitt, der mit dem Wärmemediumkanal (2) in dem abgewinkelten Rohr (5, 5a, 5b, 5A bis 5D, 5Aa bis 5Da, 5Ab bis 5Db) verbunden ist, und das aus dem Wärmemediumkanal (2) durch das abgewinkelte Rohr (5, 5a, 5b, 5A bis 5D, 5Aa bis 5Da, 5Ab bis 5Db) strömende Wärmemedium aufnimmt; und
eine Pumpe (20), die das Wärmemedium aus dem Ablaufbehälter (16, 16A bis 16C) in einen Tank fördert.

2. Die Wärmemedium-Abführvorrichtung nach Anspruch 1, wobei ein Wärmemediumkanal (2) von jeder einer Vielzahl der Solarwärmespeichervorrichtungen (1) mit dem abgewinkelte Rohr (5, 5a, 5b, 5A bis 5D, 5Aa bis 5Da, 5Ab bis 5Db) verbunden ist, und
der Ablaufbehälter (16, 16A bis 16C) an einer Position angeordnet ist, die niedriger ist als die Anschlussposition des Wärmemediumkanals (2) der Solarwärmesammelvorrichtung (1), die an einer niedrigsten Position zwischen der Vielzahl der Solarwärmesammelvorrichtungen (1) angeordnet ist.

3. Die Wärmemedium-Abführvorrichtung nach Anspruch 1,
wobei abgewinkelte Rohre (5, 5a, 5b, 5A bis 5D, 5Aa bis 5Da, 5Ab bis 5Db), die in verschiedene Richtungen in Bezug auf die horizontale Ebene geneigt sind, an untersten Enden davon in der Neigungsrichtung verbunden sind, und der Ablaufbehälter (16, 16A bis 16C) mit dem Verbindungsabschnitt verbunden ist.

4. Wärmemedium-Abführverfahren zum Abführen eines Wärmemediums aus einem Wärmemediumkanal (2) einer Solarwärmesammelvorrichtung (1) einschließend den Wärmemediumkanal (2), wobei das Wärmemedium-Abführverfahren umfasst:
Einführen von Luft in den Wärmemediumkanal (2), wenn das Heizmedium an einer höchsten Stelle des Heizmediums abgegeben wird, so dass das Wärmemedium zu einem abgewinkelten Rohr (5, 5a, 5b, 5A bis 5D, 5Aa bis 5Da, 5Ab bis 5Db) fließt, das mit dem Wärmemediumkanal verbunden ist und in Bezug auf eine horizontale Ebene geneigt ist;
Empfangen des durch das abgewinkelte Rohr (5, 5a, 5b, 5A bis 5D, 5Aa bis 5Da, 5Ab bis 5Db) strömenden Wärmemediums in einen Ablaufbehälter (16, 16A bis 16C), der mit einer Position verbunden ist, die niedriger ist als der Verbindungsabschnitt des Wärmemediumkanals (2); und
Zuführen des Wärmemediums von dem Ablaufbehälter (16, 16A bis 16C) zu einem Tank (6) durch eine Pumpe (20).

5. Wärmemedium-Abführvorrichtung nach Anspruch 4,
wobei das durch das abgewinkelte Rohr strömende Wärmemedium (5, 5a, 5b, 5A bis 5D, 5Aa bis 5Da, 5Ab bis 5Db) und der Wärmemediumkanal (2) auf einer Temperatur gehalten wird, bei der das Wärmemedium nicht verfestigt wird und die Innenseite des Ablaufbehälters (16, 16A bis 16C) auf einer warmen Temperatur gehalten wird, bei der das im Ablaufbehälter (16, 16A bis 16C) aufgenommene Wärmemedium nicht verfestigt wird.

## Revendications

1. Dispositif d'évacuation de milieu thermique pour évacuer un milieu thermique d'un canal de milieu thermique (2) d'un dispositif de recueil de chaleur solaire (1) incluant le canal de milieu thermique (2), le dispositif d'évacuation de milieu thermique comprenant :
une section d'évent (15) qui est ménagée au niveau de la position maximale en hauteur du canal de milieu thermique (2) et introduit de l'air dans le canal de milieu thermique (2) quand le milieu thermique est évacué ;
un tuyau coudé (5, 5a, 5b, 5A à 5D, 5Aa à 5Da, 5Ab à 5Db) qui est relié au canal de milieu thermique (2) et est incliné par rapport à un plan horizontal ;
un récipient de drainage (16, 16A à 16C) qui est relié à une position du tuyau coudé (5, 5a, 5b, 5A à 5D, 5Aa à 5Da, 5Ab à 5Db) plus basse qu'une section de celui-ci reliée au canal de milieu thermique (2) et reçoit le milieu thermique s'écoulant depuis le canal de milieu thermique (2) à travers le tuyau coudé (5, 5a, 5b, 5A à 5D, 5Aa à 5Da, 5Ab à 5Db) ; et
une pompe (20) pour acheminer le milieu thermique du récipient de drainage (16, 16A à 16C) à un réservoir.

2. Dispositif d'évacuation de milieu thermique selon la revendication 1,
dans lequel un canal de milieu thermique (2) de chacun d'une pluralité des dispositifs de recueil de chaleur solaire (1) est relié au tuyau coudé (5, 5a, 5b, 5A à 5D, 5Aa à 5Da, 5Ab à 5Db), et
le récipient de drainage (16, 16A à 16C) est disposé à une position plus basse que la position de liaison du canal de milieu thermique (2) du dispositif de recueil de chaleur solaire (1) disposé à une position minimale en hauteur parmi la pluralité de dispositifs de recueil de chaleur solaire (1).

3. Dispositif d'évacuation de milieu thermique selon la revendication 1,
dans lequel des tuyaux coudés (5, 5a, 5b, 5A à 5D, 5Aa à 5Da, 5Ab à 5Db) qui sont inclinés dans différentes directions par rapport au plan horizontal sont reliés à des extrémités les plus basses de ceux-ci dans la direction d'inclinaison et le récipient de drainage (16, 16A à 16C) est relié à la partie de liaison.

4. Procédé d'évacuation de milieu thermique pour évacuer un milieu thermique d'un canal de milieu thermique (2) d'un dispositif de recueil de chaleur solaire (1) incluant le canal de milieu thermique (2), le procédé d'évacuation de milieu thermique comprenant :
l'introduction d'air dans le canal de milieu thermique (2) quand le milieu thermique est évacué à la position maximale en hauteur du canal de milieu thermique (2) de sorte que le milieu thermique s'écoule jusqu'à un tuyau coudé (5, 5a, 5b, 5A à 5D, 5Aa à 5Da, 5Ab à 5Db) relié au canal de milieu thermique et incliné par rapport à un plan horizontal ;
la réception du milieu thermique s'écoulant à travers le tuyau coudé (5, 5a, 5b, 5A à 5D, 5Aa à 5Da, 5Ab à 5Db) jusque dans un récipient de drainage (16, 16A à 16C) relié à une position plus basse que la section de liaison du canal de milieu thermique (2) ; et
l'acheminement du milieu thermique du récipient de drainage (16, 16A à 16C) à un réservoir (6) par une pompe (20).

5. Procédé d'évacuation de milieu thermique selon la revendication 4,
dans lequel le milieu thermique s'écoulant à travers le tuyau coudé (5, 5a, 5b, 5A à 5D, 5Aa à 5Da, 5Ab à 5Db) et le canal de milieu thermique (2) est maintenu à une température à laquelle le milieu thermique n'est pas solidifié et l'intérieur du récipient de drainage (16, 16A à 16C) est maintenu à une température chaude à laquelle le milieu thermique reçu dans le récipient de drainage (16, 16A à 16C) n'est pas solidifié.
